# EUROPÄISCHE PATENTSCHRIFT

(11) **EP 2 366 291 B1**
(45) Veröffentlichungstag und Bekanntmachung des Hinweises auf die Patenterteilung: **24.05.2017**
(21) Anmeldenummer: 10014732.1
(22) Anmeldetag: 18.11.2010
(51) Int. Cl.: A22C 11/02, A22C 11/10, A22C 11/00, A22C 13/00, A23L 13/00, A23L 13/40, A23L 13/60

(54) **Verfahren zum Herstellen einer Esswurst**
Method for producing a sausage
Procédé de fabrication d'une saucisse comestible

(30) Priorität: 19.03.2010 DE 202010003948 U; 30.03.2010 DE 202010004354 U
(43) Veröffentlichungstag der Anmeldung: 21.09.2011
(73) Patentinhaber: INVESTBA Holding GmbH, 35619 Braunfels (DE)
(72) Erfinder: Holger, Arnold, D-35619 Braunfels (DE)
(74) Vertreter: Glück Kritzenberger Patentanwälte PartGmbB

(56) Entgegenhaltungen:
- JP-A- 2001 186 864
- US-A- 1 107 184
- US-A- 3 511 669
- US-A- 5 718 926

## Beschreibung

Die Erfindung bezieht sich auf ein Verfahren zum Herstellen einer Esswurst gemäß Oberbegriff Patentanspruch 1.

Esswürste sind grundsätzlich bekannt, wobei die sich in ihrer Farbgebung von der Grundkomponente aus Wurstmasse unterscheidende Zusatzkomponente der Wurstmasse so ausgeformt ist, dass sie ein von der Grundkomponente umschlossenes und erst beim Anschneiden der Wurst bzw. an dem jeweiligen Anschnitt optisch sichtbares Muster in Form beispielsweise einer stilisierten Figur usw. bildet.

Die Druckschrift JP 2001186864 A offenbart eine Wurst und eine Verfahren zur Herstellung einer solchen Wurst. Die Wurst besteht aus einem ersten und zweiten Rohmaterial, die mittels einer Doppeldüse gewendelt streifenförmig in den Wurstdarm eingebracht werden.

Ferner offenbart die Druckschrift US 3,511,669 A ein Verfahren zur Herstellung eines Wurstprodukts. Dabei wird eine Wurst mit unterschiedlich eingefärbten streifenförmigen Bereichen offenbart, die in Längsrichtung entlang der Wurst, in Querrichtung entlang der Wurst oder wendelförmig ausgebildet sein können.

Aufgabe der Erfindung ist es, ein Verfahren zum Herstellen einer Esswurst, insbesondere einer bissfesten Esswurst und/oder Hartwurst aufzuzeigen, die bereits an ihrer Außenseite optisch sichtbar ansprechend gestaltet ist. Zur Lösung dieser Aufgabe ist ein Verfahren zum Herstellen einer Esswurst entsprechend dem Patentanspruch 1 ausgebildet.

Eine Besonderheit der nach dem erfindungsgemäßen Verfahren hergestellten Esswurst besteht darin, dass die wenigstens eine in der Farbgebung von der Grundkomponente der Wurstmasse unterschiedliche, ebenfalls aus Wurstmasse gebildete Zusatzkomponente wenigstens einen unmittelbar an die Innenfläche des Wurstdarmes anschließenden, d.h. dort durch die Grundkomponente nicht abgedeckten streifenförmigen Bereich bildet, der dann als Streifen oder Streifenmuster durch den transparenten oder halbtransparenten Wurstdarm optisch sichtbar ist. Bei einer Ausführungsform sind wenigstens zwei streifenförmigen Bereiche so vorgesehen ist, dass diese sowohl an der Innenfläche des Wurstdarmes als auch im Kern der Esswurst von einander beabstandet bzw. durch die Grundkomponente getrennt sind. Bei einer Ausführungsform bestehen die Grundkomponente und die wenigstens eine Zusatzkomponenten aus ein und derselben Wurstgrundmasse, die bei einer Komponente wenigstens einen die abweichende Farbgebung erzeugenden Zusatz enthält. Die unterschiedliche Farbgebung wird dadurch erreicht, dass die Komponenten eine unterschiedliche Zusammensetzung besitzen, bevorzugt aber derart, dass Rezeptur der wenigstens einen Zusatzkomponente der Rezeptur der Grundkomponente im Wesentlichen entspricht, d.h. z.B. die selben Fleisch- und/oder Wurstbestandteile wie die
abweichende Farbgebung erzeugenden Zusatz enthält. Die unterschiedliche Farbgebung wird dadurch erreicht, dass die Komponenten eine unterschiedliche Zusammensetzung besitzen, bevorzugt aber derart, dass Rezeptur der wenigstens einen Zusatzkomponente der Rezeptur der Grundkomponente im Wesentlichen entspricht, d.h. z.B. die selben Fleisch- und/oder Wurstbestandteile wie die Grundkomponente enthält, zusätzlich aber farbgebende und vorzugsweise auch geschmacksbildende Zusätze, wie z.B. Käse, Kräuter, Gewürze, insbesondere Paprika usw. Grundsätzlich besteht auch die Möglichkeit, dass wenigstens zwei unmittelbar an die Innenfläche des Wurstdarmes anschließende Bereiche aus in ihrer
Grundkomponente enthält, zusätzlich aber farbgebende und vorzugsweise auch geschmacksbildende Zusätze, wie z.B. Käse, Kräuter, Gewürze, insbesondere Paprika usw. Grundsätzlich besteht auch die Möglichkeit, dass wenigstens zwei unmittelbar an die Innenfläche des Wurstdarmes anschließende Bereiche aus in ihrer Farbgebung unterschiedlichen Zusatzkomponenten jeweils aus Wurstmasse vorgesehen sind. Unabhängig von der Anzahl und Farbgebung der streifenförmigen Bereiche und/oder der Anzahl der von der Grundkomponente farblich unterschiedlichen Zusatzkomponenten sind die streifenförmige Bereiche beispielsweise so ausgeführt, dass sie geradlinig oder im Wesentlichen geradlinig verlaufen oder wendelartig ausgebildet sind.

Das erfindungsgemäße Herstellungsverfahren der Esswurst aus den wenigstens zwei in ihrer Farbgebung unterschiedlichen Wurstmassenkomponenten erfolgt durch Coextrudieren der die Komponenten bildenden Wustmassen unter Vermeidung einer Vermischung dieser Komponenten in den Wurstdarm in der Weise, dass sich die wenigstens eine Zusatzkomponente unmittelbar an die Innenfläche des Wurstdarmes anschließt und dadurch an der Außenseite der Esswurst durch den transparenten oder halbtransparenten Wurstdarm sichtbar ist. Die Komponenten besitzen zumindest beim Füllen des Wurstdarmes bzw. beim Coextrudieren dieselbe oder im Wesentlichen dieselbe Konsistenz bzw. Fließfähigkeit, um ein ansprechendes, sauberes und vor allem auch gleichbleibendes Streifenbild zu erreichen. Ist ein wendelförmiger Verlauf der wenigstens einen Zusatzkomponente um die Längserstreckung der Esswurst angestrebt, so erfolgt das Füllen des Wurstdarmes durch Coextrudieren bei relativer Rotationsbewegung zwischen der für die Coextrusion verwendeten Düse und dem Wurstdarm.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: eine Esswurst in perspektivischer Teildarstellung;
- Fig. 2: einen Schnitt durch die Esswurst der Figur 1;
- Fig. 3: sehr schematisch eine Füllanlage;
- Fig. 4: einen Schnitt durch eine weitere Esswurst.

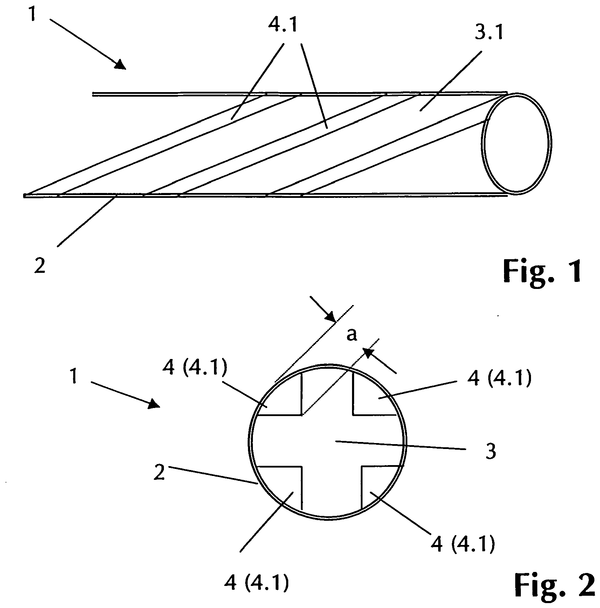

Die in den Figuren 1 - 4 allgemein mit 1 bezeichnete Esswurst, beispielsweise bissfeste Wurst oder Hartwurst, besteht im Wesentlichen aus einem transparenten oder halbtransparenten Wurstdarm 2, der mit zwei eine unterschiedliche Farbgebung aufweisenden Wurstmassen oder Komponenten 3 und 4 gefüllt ist. Der Wurstdarm 2 ist ein Darm aus einem für Nahrungsmittel bzw. Wurstdärme geeigneten oder zugelassenen Material. Die unterschiedliche Farbgebung der Wurstmassen der Komponenten 3 und 4 ist beispielsweise dadurch erzeugt, dass die die Hauptkomponente mit dem größeren Volumenanteil bildende Komponente 3 die für die Art der Esswurst 1 typische und/oder den Verbrauchern geläufige Farbgebung aufweist, während die Wurstmasse der Komponente 4 eine abweichende Farbgebung aufweist, beispielsweise durch farbgebende und auch geschmacksbildenden Zutaten. Das Füllen des Wurstdarms 2 mit den beiden Komponenten 3 und 4 erfolgt mit einer üblichen Wurstfüllanlage, und zwar in der Form, dass sich die beiden Komponenten 3 und 4 nicht vermischen, sondern die Komponente 4 unmittelbar unterhalb der Innenfläche des Wurstdarmes 2 durch diesen hindurch sichtbare streifenförmige Bereiche 4.1 mit dazwischen liegenden Streifen 3.1 der Komponente 3 bildet, und zwar bei der dargestellten Ausführungsform vier Bereiche 4.1, die jeweils wendelförmig um die Längserstreckung der Esswurst 1 verlaufen und durch die dann ebenfalls wendelförmig verlaufenden Bereiche oder Streifen 3.1 der Komponente 3 optisch voneinander getrennt sind. Die Querschnittsabmessung a, die die von der Komponente 4 gebildeten Streifen 4.1 bezogen auf den Wurstquerschnitt aufweisen, ist kleiner als der halbe Wurstquerschnitt, so dass die Streifen 4.1 auch im Wurstkern von einander beabstandet sind. Selbstverständlich sind auch andere Ausführungen der Esswurst möglich, beispielsweise in der Form, dass mehr oder weniger als vier von der Komponente 4 gebildete Bereiche 4.1 vorgesehen sind und/oder dass der von der Komponente 4 gebildete Bereich 4.1 oder mehrere von dieser Komponente gebildete Bereiche 4.1 in Längsrichtung der Esswurst 1 geradlinig oder im Wesentlichen geradlinig verlaufen.

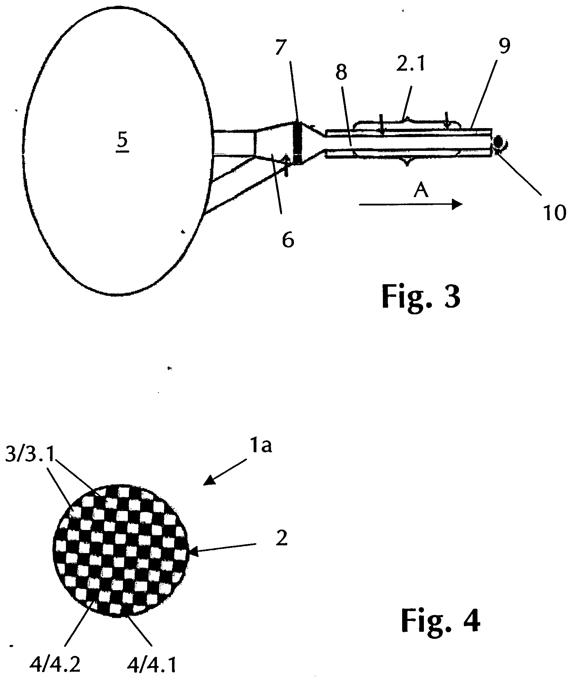

Unabhängig von der Anzahl der von der Komponente 4 gebildeten Bereiche 4.1 und/oder unabhängig von dem Verlauf der Bereiche 4.1 erfolgt das Füllen der Esswurst beispielsweise mit Hilfe einer handelsüblichen Füllanlage 5, die in der Figur 3 mit 5 sehr schematisch angegeben ist. Die wenigstens zwei Komponenten 3 und 4 werden jeweils gesondert aus der Füllanlage 5 unter Druck in eine Kupplung 6 gefördert, in der sie über eine in der Figur 3 schematisch mit 7 angedeutete Mehrfachdüse in ein Düsenfüllröhrchen 8 übergeben werden, über welches die wenigstens zwei Komponenten 3 und 4 gleichmäßig und ohne ein Vermischen in den Wurstdarm 2 eingebracht werden, sodass die an den Wurstdarm unmittelbar anschließenden und im Inneren der Esswurst 1 durch die Komponente 3 voneinander getrennten Bereiche 4.1 gebildet sind. Auf dem Düsenfüllröhrchen 8 ist ein dieses konzentrisch umschließendes Abdrehröhrchen 9 vorgesehen, auf dem sich der in der Figur 3 schematisch mit 2.1 angedeutete Darmvorrat befindet, aus welchem während des Füllvorgangs der Wurstdarm 2 in Füllrichtung A abgezogen wird. An das freie Ende des Düsenfüllröhrchens 8 in Füllrichtung A anschließend ist eine Abdreh- und/oder Verschließeinrichtung 10 vorgesehen, mit der der gefüllte Wurstdarm 2 jeweils nach der für die Esswürste 1 gewünschten Länge und/oder Portionierung abgedreht und verschlossen wird. Zur Erzeugung der von der Komponente 4 gebildeten wendelförmigen Streifen 4.1 werden während des Füllvorgangs das Abdrehröhrchen 9, der Darmvorrat 2.1 und Wurstdarm 2 relativ zu dem ortsfesten Düsenfüllröhrchen 8 gedreht. Zur Erzeugung der geradlinigen oder im Wesentlichen geradlinigen Bereiche 4.1 ist ein Drehen des Abdrehröhrchens 9 nicht erforderlich bzw. es kann auf das Abdrehröhrchen 9 ganz verzichtet werden, wobei der Darmvorrat 2.1 dann unmittelbar auf der Außenfläche des Düsenfüllröhrchens 8 vorgesehen ist.

Die Figur 4 zeigt in einer vereinfachten Schnittdarstellung eine weitere Ausführungsform der Esswurst 1a. Der Wurstdarm 2 ist wiederum mit den beiden unterschiedlichen Komponenten 3 und 4 gefüllt, und zwar derart, dass die Komponente 4 eine Vielzahl von unmittelbar an die Innenfläche des Wurstdarmes anschließende und durch den Wurstdarm hindurch sichtbare Bereiche 4.1 bildet sowie eine Vielzahl weiterer in der Figur 4 mit 4.2 bezeichneter streifenförmiger Bereiche innerhalb des Wurstquerschnittes bildet, sodass sich bei der in der Figur 4 dargestellten Ausführungsform für den Wurstquerschnitt ein schachbrettartiges Muster ergibt. Selbstverständlich sind auch andere Ausführungen möglich, insbesondere auch solche, bei denen die streifenförmigen Bereiche 4.1 bzw. 4.2 unterschiedliche Farbgebung und/oder unterschiedliche Querschnitte usw. aufweisen. Die Bereiche 4.1 und 4.2 sind bezogen auf die Längserstreckung der Esswurst 1a wendelförmig ausgeführt.

Die Erfindung wurde voranstehend an einem Ausführungsbeispiel beschrieben. Es versteht sich, dass zahlreiche weitere Änderungen sowie Abwandlungen möglich sind, ohne dass dadurch der der Erfindung zugrundeliegende Erfindungsgedanke verlassen wird. So besteht die Möglichkeit, die Esswurst unter Verwendung von mehr als zwei in ihrer Farbgebung unterschiedlichen Komponenten herzustellen, und zwar in der Weise, dass diese Komponenten jeweils einen oder aber mehrere durch den transparenten oder halbtransparenten Wurstdarm 2 optisch sichtbare Streifen bilden, wobei diese Streifen dann wendelförmig verlaufen und/oder auch unterschiedliche Farbgebung besitzen usw.

### Bezugszeichenliste

- 1: Esswu rst
- 2: Wurstdarm
- 2.1: Wurstdarmvorrat
- 3, 4: Komponenten aus Wurstmasse
- 3.1: optisch sichtbare Streifen
- 4.1, 4.2: streifenförmiger Bereich
- 5: Füllanlage
- 6: Kupplung
- 7: Mehrfachdüse
- 8: Düsenfüllröhrchen
- 9: Abdrehröhrchen
- 10: Abdreh- und/oder Verschließeinrichtung
- a: radiale Querschnittsabmessung der Streifen 4.1
- A: Abziehrichtung

## Patentansprüche

1. Verfahren zum Herstellen einer Esswurst, insbesondere einer bissfesten Wurst oder Hartwurst, durch Füllen eines transparenten oder halbtransparenten Wurstdarms (2) über ein Düsenfüllröhrchen (8) einer Füllanlage (5) mit wenigstens einer Grundkomponente (3) und mit wenigstens einer in der Farbgebung von der Grundkomponente (3) abweichenden Zusatzkomponente (4) jeweils aus Wurstmasse zur Bildung wenigstens eines optisch sichtbaren Musters, sowie durch Abziehen des Wurstdarms (2) von einem Darmvorrat auf einem das Düsenfüllröhrchen (8) konzentrisch umschließenden Abdrehröhrchen (9) beim Füllen, **dadurch gekennzeichnet, dass** die wenigstens zwei Komponenten (3, 4) jeweils gesondert unter Druck aus der Füllanlage (5) über eine Mehrfachdüse (7) in das Düsenfüllröhrchen (8) und aus diesem gleichmäßig und ohne ein Vermischen in den Wurstdarm (2) eingebracht werden und dass während des Füllens das Abdrehröhrchen (9), der Darmvorrat (2.1) und der Wurstdarm (2) relativ zu dem ortsfesten Düsenfüllröhrchen (8) gedreht werden.

2. Verfahren nach Anspruch 1, **dadurch gekennzeichnet, dass** der gefüllte Wurstdarm (2) jeweils nach der für die Esswurst (1) gewünschten Länge und/oder Portionierung abgedreht und verschlossen wird.

## Claims

1. A method for producing a sausage, in particular a sausage which is firm to the bite or a hard-cured sausage, by filling a transparent or semi-transparent sausage skin (2) by means of a nozzle filling pipe (8) of a filling system (5) with at least one basic component (3) and with at least one additional component (4) differing in colour from the basic component (3), respectively of sausage material for forming at least one optically visible pattern, and by drawing off the sausage skin (2) from a skin store on a twisting pipe (9) surrounding the nozzle filling pipe (8) concentrically, during filling, **characterized in that** the at least two components (3, 4) are introduced respectively separately under pressure out from the filling system (5) via a multiple nozzle (7) into the nozzle filling pipe (8) and from the latter, uniformly and without mixing, into the sausage skin (2), and **in that** during the filling the twisting pipe (9), the skin store (2.1) and the sausage skin (2) are rotated relative to the stationary nozzle filling pipe (8).

2. The method according to claim 1, **characterized in that** the filled sausage skin (2) is twisted off and closed respectively according to the desired length and/or portioning for the sausage (1).

## Revendications

1. Procédé destiné à fabriquer une saucisse, notamment une saucisse ferme ou un saucisson sec, par remplissage d'un boyau à saucisse (2) transparent ou semi-transparent par l'intermédiaire d'une canule de remplissage (8) à buse d'une installation de remplissage (5) avec au moins un composant de base (3) et avec au moins un composant additif (4) différent dans sa teinte du composant de base (3), chacun en une masse à saucisse pour former au moins un motif optiquement visible, ainsi que par dévêtissage du boyau à saucisse (2) d'une réserve de boyau sur un tube de torsion (9) entourant de manière concentrique la canule de remplissage (8) à buse lors du remplissage, **caractérisé en ce que** les au moins deux composants (3, 4) sont introduits chacun séparément sous pression, hors de l'installation de remplissage (5), par l'intermédiaire d'une buse multiple (7) dans la canule de remplissage (8) à buse et à partir de celle-ci régulièrement et sans aucun mélange dans le boyau à saucisse (2) et **en ce que** pendant le remplissage, on fait tourner le tube de torsion (9), la réserve de boyau (2.1) et le boyau à saucisse (2) par rapport à la canule de remplissage (8) à buse stationnaire.

2. Procédé selon la revendication 1, **caractérisé en ce qu'**on retire par torsion le boyau à saucisse (2) rempli chaque fois à la longueur et/ou portion souhaitée pour la saucisse (1) et on le ferme.
